# EUROPEAN PATENT APPLICATION

(11) **EP 4 694 563 A1**
(43) Date of publication of application: **11.02.2026**
(21) Application number: 23931416.4
(22) Date of filing: 06.04.2023
(51) Int. Cl.: H04W 76/27

(54) **INFORMATION TRANSMISSION METHOD, APPARATUS AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Hersina, Günter
(86) International application number: PCT/CN2023/086691
(87) International publication number: WO 2024/207347

(57) **Abstract**

Provided in the embodiments of the present disclosure are an information transmission method, an apparatus and a storage medium. The method comprises: according to a configuration result, sending first information to a network device, wherein the configuration result is a result of configuring for a terminal in a radio resource control (RRC) non-connected state an uplink positioning reference signal, the first information is used for requesting the network device to configure the uplink positioning reference signal, and the RRC non-connected state is an RRC idle state or an RRC inactive state. The method can send the first information to the network device according to the result of configuring for the terminal in the RRC non-connected state the uplink positioning reference signal, so as to request the network device to configure the uplink positioning reference signal, and, compared with modes that cannot send first information according to configuration results, can still continue sending uplink positioning reference signals after terminals switch to an RRC connected state, thus reducing positioning interruptions caused by failures of sending uplink positioning reference signals, and improving the positioning reliability.

## Description

### FIELD

The present disclosure relates to, but is not limited to, the field of wireless communication technologies, and particularly to an information transmission method, an information transmission apparatus and a storage medium.

### BACKGROUND

In wireless communication technologies, the new radio (NR) supports the positioning of a terminal under radio resource control (RRC). The positioning procedure of the terminal includes an uplink positioning procedure and an uplink and downlink combined positioning procedure. For the uplink positioning technology and the uplink and downlink combined positioning technology, the terminal needs to transmit an uplink positioning reference signal.

### SUMMARY

Embodiments of the present disclosure disclose an information transmission method, an information transmission apparatus and a storage medium.

According to embodiments of a first aspect of the present disclosure, an information transmission method is provided. The method is performed by a terminal, and includes: transmitting first information to a network device based on a configuration result. The configuration result is a result of configuring an uplink positioning reference signal for the terminal in a radio resource control (RRC) disconnected state; the first information is used to request the network device to configure the uplink positioning reference signal; and the RRC disconnected state is an RRC idle state or an RRC inactive state.

In an embodiment, transmitting the first information to the network device based on the configuration result includes: transmitting the first information to the network device based on the configuration result and received information.

In an embodiment, transmitting the first information to the network device based on the configuration result and the received information includes at least one of: determining that request information from a lower layer for releasing the uplink positioning reference signal is received, and transmitting the first information to the network device; or, determining that the uplink positioning reference signal is configured and second information is received, and transmitting the first information to the network device, wherein the second information is configured to indicate the terminal to switch from the RRC disconnected state to a RRC connected state.

In an embodiment, the second information is RRC resume information or RRC setup information.

In an embodiment, transmitting the first information to the network device based on the configuration result includes at least one of: determining that the configured uplink positioning reference signal is not associated with a valid area, and transmitting the first information to the network device after the terminal performs cell reselection; or, determining that the configured uplink positioning reference signal is associated with a valid area and a reselected cell is not in the valid area, and transmitting the first information to the network device after the terminal performs cell reselection.

In an embodiment, transmitting the first information to the network device based on the configuration result includes: determining that the uplink positioning reference signal is configured and the terminal performs cell handover, and transmitting the first information to the network device.

In an embodiment, transmitting the first information to the network device includes: transmitting the first information to the network device through a predetermined message. The predetermined message includes at least one of: an RRC resume request message; an RRC uplink information transfer message; an RRC positioning assistance information; or an RRC setup complete message.

According to embodiments of a second aspect of the present disclosure, an information reception method is provided. The method is performed by a network device, and includes: receiving first information transmitted from a terminal. The first information is used to request the network device to configure an uplink positioning reference signal.

In an embodiment, receiving the first information transmitted from the terminal includes: receiving the first information transmitted from the terminal through a predetermined message. The predetermined message includes at least one of: a radio resource control (RRC) resume request message; an RRC uplink information transfer message; an RRC positioning assistance information; or an RRC setup complete message.

According to embodiments of a third aspect of the present disclosure, a terminal is provided. The terminal includes a transmitting module configured to transmit first information to a network device based on a configuration result. The configuration result is a result of configuring an uplink positioning reference signal for the terminal in a radio resource control (RRC) disconnected state; the first information is configured to request the network device to configure the uplink positioning reference signal; and the RRC disconnected state is an RRC idle state or an RRC inactive state.

According to embodiments of a fourth aspect of the present disclosure, a network device is provided. The network device includes a receiving module configured to receive first information transmitted from a terminal. The first information is configured to request the network device to configure an uplink positioning reference signal.

According to embodiments of a fifth aspect of the present disclosure, a communication system is provided. The communication system includes a terminal and a network device. The terminal is configured to perform any method perform by the terminal in the present disclosure, and the network device is configured to perform any method perform by the network device in the present disclosure.

According to embodiments of a sixth aspect of the present disclosure, a communication device is provided. The communication device includes: a processor; and a memory configured to store instructions executable by the processor. The processor is configured to perform the method according to any embodiment of the present disclosure when executing the executable instructions.

According to embodiments of a seventh aspect of the present disclosure, a computer storage medium is provided. The computer storage medium is configured to store a computer executable program which, when executed by a processor, realizes the method described in any embodiment of the present disclosure.

In the embodiments of the present disclosure, the first information is transmitted to the network device based on the configuration result, the configuration result is the result of configuring the uplink positioning reference signal for the terminal in the RRC disconnected state, the first information is used to request the network device to configure the uplink positioning reference signal, and the RRC disconnected state is the RRC idle state or the RRC inactive state. Here, the first information may be transmitted to the network device based on the result of configuring the uplink positioning reference signal for the terminal in the RRC disconnected state, so as to request the network device to configure the uplink positioning reference signal. Compared with the mode that the first information cannot be transmitted based on the configuration result, the uplink positioning reference signal may continue to be transmitted after the terminal is switched to the RRC connected state, so that the positioning interruption caused by the failure to transmit the uplink positioning reference signal may be reduced, and thus the positioning reliability is improved.

### BRIEF DESCRIPTION OF THE DRAWINGS

Fig. 1 is a schematic diagram of a wireless communication system according to an illustrative embodiment.
Fig. 2 is a flowchart of an information transmission method according to an illustrative embodiment.
Fig. 3 is a flowchart of an information transmission method according to an illustrative embodiment.
Fig. 4 is a flowchart of an information transmission method according to an illustrative embodiment.
Fig. 5 is a flowchart of an information transmission method according to an illustrative embodiment.
Fig. 6 is a flowchart of an information transmission method according to an illustrative embodiment.
Fig. 7 is a flowchart of an information transmission method according to an illustrative embodiment.
Fig. 8 is a flowchart of an information reception method according to an illustrative embodiment.
Fig. 9 is a schematic diagram of a terminal according to an illustrative embodiment.
Fig. 10 is a schematic diagram of a network device according to an illustrative embodiment.
Fig. 11 is a schematic diagram of a terminal according to an illustrative embodiment.
Fig. 12 is a block diagram of a base station according to an illustrative embodiment.

### DETAILED DESCRIPTION

Reference now is made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the embodiments of the present disclosure. Rather, they are merely examples of devices and methods consistent with some aspects of embodiments of the present disclosure as detailed in the appended claims.

The terms used in the embodiments of the present disclosure are for the purpose of describing specific embodiments only, and are not intended to limit the embodiments of the present disclosure. The singular forms "a/an" and "the" used in the embodiments of the present disclosure and the appended claims are also intended to include the plural forms, unless the context clearly indicates other meaning. It should also be understood that the term "and/or" as used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be called the second information, and similarly, the second information may also be called the first information. Depending on the context, the word "if" as used herein may be interpreted as "when" or "while" or "in response to determining......".

For the sake of conciseness and easy understanding, the term "greater than" or "less than" is used herein to represent a size relationship. But for those skilled in the art, it may be understood that the term "greater than" also covers the meaning of "greater than or equal to" and "less than" also covers the meaning of "less than or equal to".

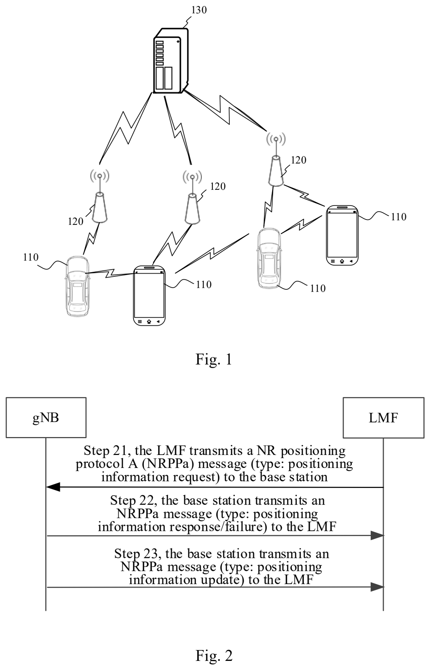

Fig. 1 shows a schematic diagram of a wireless communication system provided by an embodiment of the present disclosure. As shown in Fig. 1, the wireless communication system is a communication system based on mobile communication technologies, and may include several user equipment 110 and several base stations 120.

The user equipment 110 may be a device that provides voice and/or data connectivity to users. The user equipment 110 may communicate with one or more core networks via a radio access network (RAN). The user equipment 110 may be an Internet of Things user equipment, such as a sensor device, a mobile phone, and a computer with an Internet of Things user equipment. For example, it may be a fixed, portable, pocket-sized, handheld, computer-built or vehicle-mounted device. For example, a station (STA), a subscriber unit, a subscriber station, a mobile station, a mobile, a remote station, an access point, a remote terminal, an access terminal, a user terminal, a user agent, a user device, or a terminal. Alternatively, the user equipment 110 may also be a device of an unmanned aerial vehicle. Alternatively, the user equipment 110 may also be a vehicle-mounted device, for example, a driving computer with a wireless communication function, or a wireless user equipment with an external driving computer. Alternatively, the user equipment 110 may also be a roadside device, such as a street lamp, a signal lamp or other roadside devices with a wireless communication function.

The base station 120 may be a network-side device in a wireless communication system. The wireless communication system may be the 4th generation mobile communication (4G) system, also known as a long term evolution (LTE) system. Alternatively, the wireless communication system may also be a 5G system, also known as a new radio (NR) system or a 5G NR system. Alternatively, the wireless communication system may also be the next generation system of the 5G system. An access network in the 5G system may be called a new generation-radio access network (NG-RAN).

The base station 120 may be an evolved node B (eNB) adopted in the 4G system. Alternatively, the base station 120 may also be a node B (gNB) adopting a centralized and distributed architecture in the 5G system. When the base station 120 adopts a centralized and distributed architecture, it usually includes a central unit (CU) and at least two distributed units (DUs). The central unit is provided with a packet data convergence protocol (PDCP) layer, a radio link control (RLC) protocol layer and a media access control (MAC) layer; and a physical (PHY) layer protocol stack is arranged in the distributed unit. The embodiments of the present disclosure do not limit the specific implementation of the base station 120.

A wireless connection may be established between the base station 120 and the user equipment 110 through a wireless air interface. In different embodiments, the wireless air interface is a wireless air interface based on the standard of the fourth generation mobile communication network technology (4G); alternatively, the wireless interface is a wireless air interface based on the standard of the fifth generation mobile communication network technology (5G), for example, the wireless interface is the new radio; alternatively, the wireless air interface may also be a wireless air interface based on the standard of the next generation mobile communication network of 5G.

In some embodiments, an end to end (E2E) connection may also be established between the user equipment 110, for example, vehicle to vehicle (V2V) communication, vehicle to Infrastructure (V2I) communication, vehicle to pedestrian (V2P) communication and other scenarios in vehicle to everything communication.

Here, the above user equipment may be considered as the terminal of the following embodiments.

In some embodiments, the above wireless communication system may further include a network management device 130.

The several base stations 120 are respectively connected with the network management device 130. The network management device 130 may be a core network device in a wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS). The embodiments of the present disclosure do not limit the implementation form of the network management device 130.

In order to facilitate the understanding of those skilled in the art, the embodiments of the present disclosure list a plurality of implementations to clearly explain the technical scheme of the embodiments of the present disclosure. Of course, those skilled in the art may understand that the implementations provided by the embodiments of the present disclosure may be executed alone, or in combination with the methods of other implementations of the embodiments of the present disclosure, or together with some methods in the related art thereafter, which is not limited by the embodiment of the present disclosure.

In order to better understand the embodiments of the present disclosure, application scenarios in wireless communication are described below.

In an embodiment, the base station transmits an uplink positioning reference signal configuration for an RRC inactive state to the terminal through an RRC release message, and the terminal releases the uplink positioning reference signal configuration after the terminal performs cell reselection.

In an embodiment, referring to Fig. 2, a procedure that a location management function (LMF) requests the base station to determine the uplink positioning reference signal for the terminal includes the following steps.

In step 21, the LMF transmits a NR positioning protocol A (NRPPa) message (type: positioning information request) to the base station.

In step 22, the base station transmits an NRPPa message (type: positioning information response/failure) to the LMF.

In step 23, the base station transmits an NRPPa message (type: positioning information update) to the LMF.

In an embodiment, the terminal may transmit a sounding reference signal (SRS) to the base station.

In an embodiment, the uplink positioning reference signal is the SRS.

In an embodiment, when the uplink positioning reference signal is configured for the terminal in the RRC inactive state, after the terminal switches from the RRC inactive state to a RRC connected state, the terminal cannot continue to transmit an inactive uplink positioning reference signal, resulting in the positioning interruption.

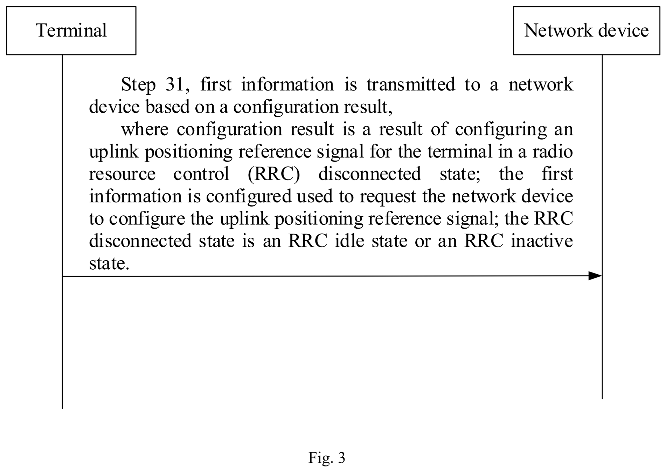

As shown in Fig. 3, this embodiment provides an information transmission method, the method is performed by a terminal, and the method includes the following steps.

In step 31, first information is transmitted to a network device based on a configuration result.

The configuration result is a result of configuring an uplink positioning reference signal for the terminal in a radio resource control (RRC) disconnected state. The first information is used to request the network device to configure the uplink positioning reference signal. The RRC disconnected state is an RRC idle state or an RRC inactive state.

Here, the terminal involved in the present disclosure may be, but are not limited to, a mobile phone, a wearable device, a vehicle-mounted terminal, a roadside unit (RSU), a smart home terminal, an industrial sensing device and/or a medical device. In some embodiments, the terminal may be a Redcap terminal or a new radio (NR) terminal of a predetermined version (for example, a NR terminal of R17).

The network device involved in the present disclosure may also be an access network device or a core network device. The access network device may be a base station. The core network device may be a first network function, and the first network function may be a location management function network element. For example, the location management function network element includes a location server, and the location server may be implemented as any one of a location management function (LMF), an enhanced serving mobile location center (E-SMLC), a secure user plane location (SUPL) and a SUPL location platform (SUPLLP).

In an embodiment, the first information is transmitted to the network device through a predetermined message based on the configuration result. The configuration result is the result of configuring the uplink positioning reference signal for the terminal in the radio resource control (RRC) disconnected state. The first information is used to request the network device to configure the uplink positioning reference signal. The RRC disconnected state is the RRC idle state or the RRC inactive state. The predetermined message includes at least one of an RRC resume request message; an RRC uplink information transfer message; an RRC positioning assistance information; and an RRC setup complete message.

In an embodiment, in response to that the terminal switches to an RRC connected state, the first information is transmitted to the network device based on the configuration result. The configuration result is the result of configuring the uplink positioning reference signal for the terminal in the radio resource control (RRC) disconnected state. The first information is used to request the network device to configure the uplink positioning reference signal. The RRC disconnected state is the RRC idle state or the RRC inactive state.

In an embodiment, the first information is transmitted to the network device based on the configuration result and received information. The configuration result is the result of configuring the uplink positioning reference signal for the terminal in the radio resource control (RRC) disconnected state. The first information is used to request the network device to configure the uplink positioning reference signal. The RRC disconnected state is the RRC idle state or the RRC inactive state.

In an embodiment, it is determined that request information from a lower layer for releasing the uplink positioning reference signal is received, and the first information is transmitted to the network device. The first information is used to request the network device to configure the uplink positioning reference signal.

It should be noted that if the terminal receives the request information from the lower layer for releasing the uplink positioning reference signal, it means that, before receiving the request information, the terminal is configured with the uplink positioning reference signal.

In an embodiment, it is determined that the uplink positioning reference signal is configured for the terminal in the RRC disconnected state and second information is received, and the first information is transmitted to the network device. The second information is used to indicate the terminal to switch from the RRC disconnected state to an RRC connected state. The first information is used to request the network device to configure the uplink positioning reference signal. The RRC disconnected state is the RRC idle state or the RRC inactive state.

For example, it is determined that a base station configures the uplink positioning reference signal for the terminal in the RRC disconnected state and the second information is received, and the first information is transmitted to the network device. The second information is used to indicate the terminal to switch from the RRC disconnected state to the RRC connected state. The first information is used to request the network device to configure the uplink positioning reference signal. The RRC disconnected state includes the RRC idle state and/or the RRC inactive state.

For example, it is determined that an LMF configures the uplink positioning reference signal for the terminal in the RRC disconnected state and the second information is received, and the first information is transmitted to the network device. The second information is used to indicate the terminal to switch from the RRC disconnected state to the RRC connected state. The first information is used to request the network device to configure the uplink positioning reference signal. The RRC disconnected state is the RRC idle state or the RRC inactive state.

In an embodiment, it is determined that the uplink positioning reference signal is configured for the terminal in the RRC inactive state and RRC resume information is received, and the first information is transmitted to the network device. The first information is used to request the network device to configure the uplink positioning reference signal.

For example, it is determined that a base station configures the uplink positioning reference signal for the terminal in the RRC inactive state and the RRC resume information is received, and the first information is transmitted to the network device. The first information is used to request the network device to configure the uplink positioning reference signal.

For example, it is determined that an LMF configures the uplink positioning reference signal for the terminal in the RRC inactive state and the RRC resume information is received, and the first information is transmitted to the network device. The first information is used to request the network device to configure the uplink positioning reference signal.

In an embodiment, it is determined that the uplink positioning reference signal is configured for the terminal in the RRC disconnected state and RRC setup information is received, and the first information is transmitted to the network device. The first information is used to request the network device to configure the uplink positioning reference signal. The RRC disconnected state is the RRC idle state or the RRC inactive state.

For example, it is determined that a base station configures the uplink positioning reference signal for the terminal in the RRC disconnected state and the RRC setup information is received, and the first information is transmitted to the network device. The first information is used to request the network device to configure the uplink positioning reference signal. The RRC disconnected state is the RRC idle state or the RRC inactive state.

For example, it is determined that an LMF configures the uplink positioning reference signal for the terminal in the RRC disconnected state and the RRC setup information is received, and the first information is transmitted to the network device. The first information is used to request the network device to configure the uplink positioning reference signal. The RRC disconnected state is the RRC idle state or the RRC inactive state.

In an embodiment, it is determined that the uplink positioning reference signal configured for the terminal in the RRC inactive state is not associated with a valid area, and the first information is transmitted to the network device after the terminal performs cell reselection. The first information is used to request the network device to configure the uplink positioning reference signal.

For example, it is determined that the uplink positioning reference signal configured by a base station for the terminal in the RRC inactive state is not associated with the valid area, and the first information is transmitted to the network device after the terminal performs the cell reselection. The first information is used to request the network device to configure the uplink positioning reference signal.

For example, it is determined that the uplink positioning reference signal configured by an LMF for the terminal in the RRC inactive state is not associated with the valid area, and the first information is transmitted to the network device after the terminal performs the cell reselection. The first information is used to request the network device to configure the uplink positioning reference signal.

In an embodiment, it is determined that the uplink positioning reference signal configured for the terminal in the RRC inactive state is associated with a valid area and a cell reselected after the terminal performs cell reselection is not in the valid area, and the first information is transmitted to the network device. The first information is used to request the network device to configure the uplink positioning reference signal.

For example, it is determined that the uplink positioning reference signal configured by a base station for the terminal in the RRC inactive state is associated with the valid area and the cell reselected after the terminal performs the cell reselection is not in the valid area, and the first information is transmitted to the network device. The first information is used to request the network device to configure the uplink positioning reference signal.

For example, it is determined that the uplink positioning reference signal configured by an LMF for the terminal in the RRC inactive state is associated with the valid area and the cell reselected after the terminal performs the cell reselection is not in the valid area, and the first information is transmitted to the network device. The first information is used to request the network device to configure the uplink positioning reference signal.

It should be noted that assuming that the valid area is represented by a physical cell identifier (PCI) list (including PCI1, PCI2 and PCI3), the terminal performs the cell reselection, and in a case that the PCI of the cell reselected by the terminal is PCI5, the terminal releases the uplink positioning reference signal configured for the terminal in the RRC inactive state.

In an embodiment, it is determined that the uplink positioning reference signal is configured for the terminal in the RRC inactive state and the terminal performs cell handover, and the first information is transmitted to the network device. The first information is used to request the network device to configure the uplink positioning reference signal.

For example, it is determined that a base station configures the uplink positioning reference signal for the terminal in the RRC inactive state and the terminal performs the cell handover, and the first information is transmitted to the network device. The first information is used to request the network device to configure the uplink positioning reference signal.

For example, it is determined that an LMF configures the uplink positioning reference signal for the terminal in the RRC inactive state and the terminal performs the cell handover, and the first information is transmitted to the network device. The first information is used to request the network device to configure the uplink positioning reference signal.

In the embodiment of the present disclosure, the first information is transmitted to the network device based on the configuration result, the configuration result is the result of configuring the uplink positioning reference signal for the terminal in the RRC disconnected state, the first information is used to request the network device to configure the uplink positioning reference signal, and the RRC disconnected state is the RRC idle state or the RRC inactive state. Here, the first information may be transmitted to the network device based on the result of configuring the uplink positioning reference signal for the terminal in the RRC disconnected state, so as to request the network device to configure the uplink positioning reference signal. Compared with the mode that the first information cannot be transmitted based on the configuration result, the uplink positioning reference signal may continue to be transmitted after the terminal is switched to the RRC connected state, so that the positioning interruption caused by the failure to transmit the uplink positioning reference signal may be reduced, and thus the positioning reliability is improved.

It should be noted that those skilled in the art may understand that the methods provided by the embodiments of the present disclosure may be executed alone or together with some methods in the embodiments of the present disclosure or some methods in the related art.

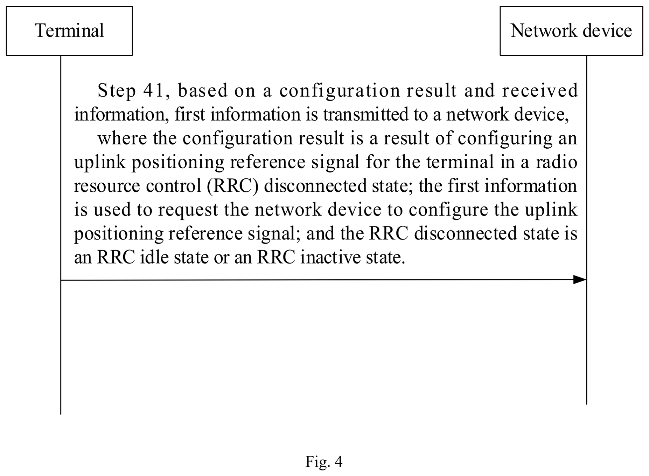

As shown in Fig. 4, an embodiment of the present disclosure provides an information transmission method, the method is performed by the terminal, and the method includes the following steps.

In step 41, based on a configuration result and received information, first information is transmitted to a network device.

The configuration result is a result of configuring an uplink positioning reference signal for the terminal in a radio resource control (RRC) disconnected state. The first information is used to request the network device to configure the uplink positioning reference signal. The RRC disconnected state is an RRC idle state or an RRC inactive state.

In an embodiment, based on the configuration result and the received information, the first information is transmitted to an access network device through a predetermined message. The configuration result is the result of configuring the uplink positioning reference signal for the terminal in the RRC disconnected state. The first information is used to request the access network device to configure the uplink positioning reference signal. The RRC disconnected state is the RRC idle state or the RRC inactive state. The predetermined message includes at least one of an RRC resume request message; an RRC uplink information transfer message; an RRC positioning assistance information; and an RRC setup complete message.

In an embodiment, it is determined that request information from a lower layer for releasing the uplink positioning reference signal is received, and the first information is transmitted to the network device. The first information is used to request the network device to configure the uplink positioning reference signal.

In an embodiment, it is determined that the uplink positioning reference signal is configured for the terminal in the RRC disconnected state and second information is received, and the first information is transmitted to the network device. The second information is used to indicate the terminal to switch from the RRC disconnected state to an RRC connected state. The first information is used to request the network device to configure the uplink positioning reference signal. The RRC disconnected state is the RRC idle state or the RRC inactive state.

For example, it is determined that a base station configures the uplink positioning reference signal for the terminal in the RRC disconnected state and the second information is received, and the first information is transmitted to the network device. The second information is used to indicate the terminal to switch from the RRC disconnected state to the RRC connected state. The first information is used to request the network device to configure the uplink positioning reference signal. The RRC disconnected state is the RRC idle state or the RRC inactive state.

For example, it is determined that an LMF configures the uplink positioning reference signal for the terminal in the RRC disconnected state and the second information is received, and the first information is transmitted to the network device. The second information is used to indicate the terminal to switch from the RRC disconnected state to the RRC connected state. The first information is used to request the network device to configure the uplink positioning reference signal. The RRC disconnected state is the RRC idle state or the RRC inactive state.

In an embodiment, it is determined that the uplink positioning reference signal is configured for the terminal in the RRC inactive state and RRC resume information is received, and the first information is transmitted to the network device. The first information is used to request the network device to configure the uplink positioning reference signal.

For example, it is determined that a base station configures the uplink positioning reference signal for the terminal in the RRC inactive state and the RRC resume information is received, and the first information is transmitted to the network device. The first information is used to request the network device to configure the uplink positioning reference signal.

For example, it is determined that an LMF configures the uplink positioning reference signal for the terminal in the RRC inactive state and the RRC resume information is received, and the first information is transmitted to the network device. The first information is used to request the network device to configure the uplink positioning reference signal.

In an embodiment, it is determined that the uplink positioning reference signal is configured for the terminal in the RRC disconnected state and RRC setup information is received, and the first information is transmitted to the network device. The first information is used to request the network device to configure the uplink positioning reference signal. The RRC disconnected state is the RRC idle state or the RRC inactive state.

For example, it is determined that a base station configures the uplink positioning reference signal for the terminal in the RRC disconnected state and the RRC setup information is received, and the first information is transmitted to the network device. The first information is used to request the network device to configure the uplink positioning reference signal. The RRC disconnected state is the RRC idle state or the RRC inactive state.

For example, it is determined that an LMF configures the uplink positioning reference signal for the terminal in the RRC disconnected state and the RRC setup information is received, and the first information is transmitted to the network device. The first information is used to request the network device to configure the uplink positioning reference signal. The RRC disconnected state is the RRC idle state or the RRC inactive state.

It should be noted that those skilled in the art may understand that the methods provided by the embodiments of the present disclosure may be executed alone or together with some methods in the embodiments of the present disclosure or some methods in the related art.

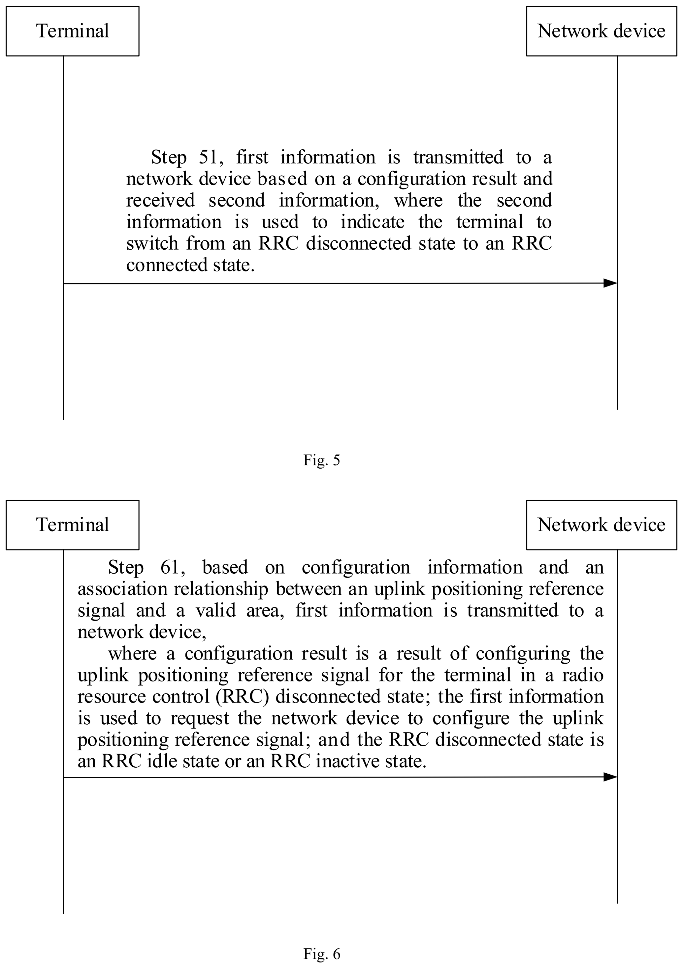

As shown in Fig. 5, an embodiment of the present disclosure provides an information transmission method, the method is performed by the terminal, and the method includes the following steps.

In step 51, first information is transmitted to a network device based on a configuration result and received second information. The second information is used to indicate the terminal to switch from an RRC disconnected state to an RRC connected state.

The configuration result is a result of configuring an uplink positioning reference signal for the terminal in a radio resource control (RRC) disconnected state. The first information is used to request the network device to configure the uplink positioning reference signal. The RRC disconnected state is an RRC idle state or an RRC inactive state.

In an embodiment, based on the configuration result and a received message that causes the terminal to switch from the RRC disconnected state to the RRC connected state, the first information is transmitted to an access network device through a predetermined message. The configuration result is the result of configuring the uplink positioning reference signal for the terminal in the RRC disconnected state. The first information is used to request the access network device to configure the uplink positioning reference signal. The RRC disconnected state is the RRC idle state or the RRC inactive state. The predetermined message includes at least one of an RRC resume request message; an RRC uplink information transfer message; an RRC positioning assistance information; and an RRC setup complete message.

In an embodiment, it is determined that the uplink positioning reference signal is configured for the terminal in the RRC disconnected state and the second information is received, and the first information is transmitted to the network device. The second information is used to indicate the terminal to switch from the RRC disconnected state to the RRC connected state. The first information is used to request the network device to configure the uplink positioning reference signal. The RRC disconnected state is the RRC idle state or the RRC inactive state.

For example, it is determined that a base station configures the uplink positioning reference signal for the terminal in the RRC disconnected state and the second information is received, and the first information is transmitted to the network device. The second information is used to indicate the terminal to switch from the RRC disconnected state to the RRC connected state. The first information is used to request the network device to configure the uplink positioning reference signal. The RRC disconnected state is the RRC idle state or the RRC inactive state.

For example, it is determined that an LMF configures the uplink positioning reference signal for the terminal in the RRC disconnected state and the second information is received, and the first information is transmitted to the network device. The second information is used to indicate the terminal to switch from the RRC disconnected state to the RRC connected state. The first information is used to request the network device to configure the uplink positioning reference signal. The RRC disconnected state is the RRC idle state or the RRC inactive state.

In an embodiment, it is determined that the uplink positioning reference signal is configured for the terminal in the RRC inactive state and RRC resume information is received, and the first information is transmitted to the network device. The first information is used to request the network device to configure the uplink positioning reference signal.

For example, it is determined that a base station configures the uplink positioning reference signal for the terminal in the RRC inactive state and the RRC resume information is received, and the first information is transmitted to the network device. The first information is used to request the network device to configure the uplink positioning reference signal.

For example, it is determined that an LMF configures the uplink positioning reference signal for the terminal in the RRC inactive state and the RRC resume information is received, and the first information is transmitted to the network device. The first information is used to request the network device to configure the uplink positioning reference signal.

In an embodiment, it is determined that the uplink positioning reference signal is configured for the terminal in the RRC disconnected state and RRC setup information is received, and the first information is transmitted to the network device. The first information is used to request the network device to configure the uplink positioning reference signal. The RRC disconnected state is the RRC idle state or the RRC inactive state.

For example, it is determined that a base station configures the uplink positioning reference signal for the terminal in the RRC disconnected state and the RRC setup information is received, and the first information is transmitted to the network device. The first information is used to request the network device to configure the uplink positioning reference signal. The RRC disconnected state is the RRC idle state or the RRC inactive state.

For example, it is determined that an LMF configures the uplink positioning reference signal for the terminal in the RRC disconnected state and the RRC setup information is received, and the first information is transmitted to the network device. The first information is used to request the network device to configure the uplink positioning reference signal. The RRC disconnected state is the RRC idle state or the RRC inactive state.

It should be noted that those skilled in the art may understand that the methods provided by the embodiments of the present disclosure may be executed alone or together with some methods in the embodiments of the present disclosure or some methods in the related art.

As shown in Fig. 6, an embodiment of the present disclosure provides an information transmission method, the method is performed by the terminal, and the method includes the following steps.

In step 61, based on configuration information and an association relationship between an uplink positioning reference signal and a valid area, first information is transmitted to a network device.

A configuration result is a result of configuring the uplink positioning reference signal for the terminal in a radio resource control (RRC) disconnected state. The first information is used to request the network device to configure the uplink positioning reference signal. The RRC disconnected state is an RRC idle state or an RRC inactive state.

In an embodiment, based on the configuration information and the association relationship between the uplink positioning reference signal and the valid area, the first information is transmitted to the network device through a predetermined message. The configuration result is the result of configuring the uplink positioning reference signal for the terminal in the RRC disconnected state. The first information is used to request the network device to configure the uplink positioning reference signal. The RRC disconnected state is the RRC idle state or the RRC inactive state. The predetermined message includes at least one of an RRC resume request message; an RRC uplink information transfer message; an RRC positioning assistance information; and an RRC setup complete message.

In an embodiment, it is determined that the uplink positioning reference signal configured for the terminal in the RRC inactive state is not associated with the valid area, and the first information is transmitted to the network device after the terminal performs cell reselection. The first information is used to request the network device to configure the uplink positioning reference signal.

For example, it is determined that the uplink positioning reference signal configured by a base station for the terminal in the RRC inactive state is not associated with the valid area, and the first information is transmitted to the network device after the terminal performs the cell reselection. The first information is used to request the network device to configure the uplink positioning reference signal.

For example, it is determined that the uplink positioning reference signal configured by an LMF for the terminal in the RRC inactive state is not associated with the valid area, and the first information is transmitted to the network device after the terminal performs the cell reselection. The first information is used to request the network device to configure the uplink positioning reference signal.

In an embodiment, it is determined that the uplink positioning reference signal configured for the terminal in the RRC inactive state is associated with the valid area and a cell reselected after the terminal performs cell reselection is not in the valid area, and the first information is transmitted to the network device. The first information is used to request the network device to configure the uplink positioning reference signal.

For example, it is determined that the uplink positioning reference signal configured by a base station for the terminal in the RRC inactive state is associated with the valid area and the cell reselected after the terminal performs the cell reselection is not in the valid area, and the first information is transmitted to the network device. The first information is used to request the network device to configure the uplink positioning reference signal.

For example, it is determined that the uplink positioning reference signal configured by an LMF for the terminal in the RRC inactive state is associated with the valid area and the cell reselected after the terminal performs the cell reselection is not in the valid area, and the first information is transmitted to the network device. The first information is used to request the network device to configure the uplink positioning reference signal.

It should be noted that those skilled in the art may understand that the methods provided by the embodiments of the present disclosure may be executed alone or together with some methods in the embodiments of the present disclosure or some methods in the related art.

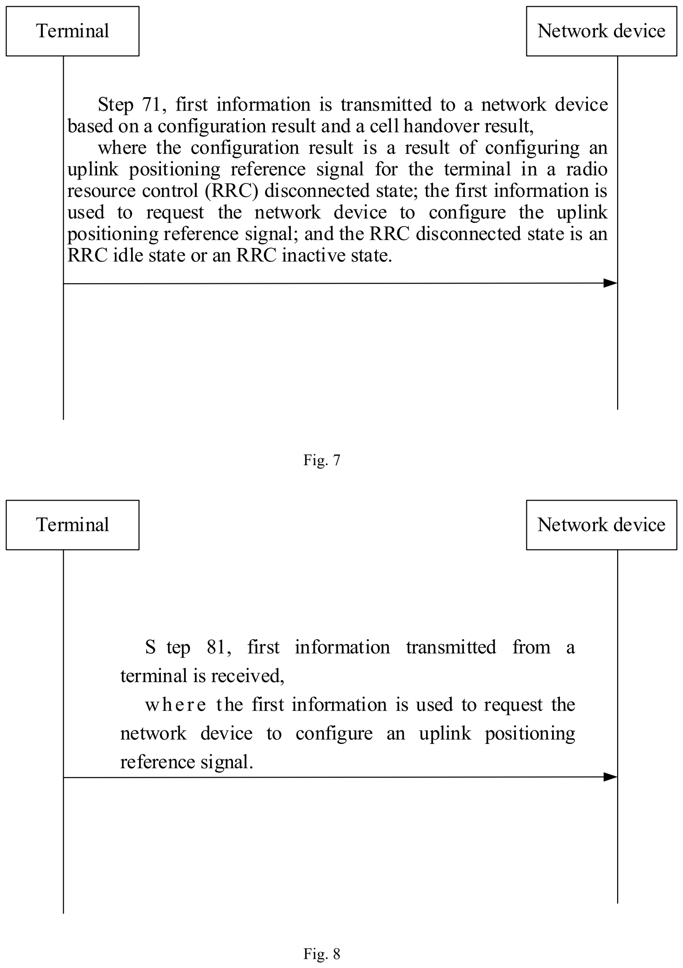

As shown in Fig. 7, an embodiment of the present disclosure provides an information transmission method, the method is performed by the terminal, and the method includes the following steps.

In step 71, first information is transmitted to a network device based on a configuration result and a cell handover result.

The configuration result is a result of configuring an uplink positioning reference signal for the terminal in a radio resource control (RRC) disconnected state. The first information is used to request the network device to configure the uplink positioning reference signal. The RRC disconnected state is an RRC idle state or an RRC inactive state.

In an embodiment, based on the configuration result and the cell handover result, the first information is transmitted to the network device through a predetermined message. The configuration result is the result of configuring the uplink positioning reference signal for the terminal in the RRC disconnected state. The first information is used to request the network device to configure the uplink positioning reference signal. The RRC disconnected state is the RRC idle state or the RRC inactive state. The predetermined message includes at least one of an RRC resume request message; an RRC uplink information transfer message; an RRC positioning assistance information; and an RRC setup complete message.

In an embodiment, it is determined that the uplink positioning reference signal is configured for the terminal in the RRC inactive state and the terminal performs cell handover, and the first information is transmitted to the network device. The first information is used to request the network device to configure the uplink positioning reference signal.

For example, it is determined that a base station configures the uplink positioning reference signal for the terminal in the RRC inactive state and the terminal performs the cell handover, and the first information is transmitted to the network device. The first information is used to request the network device to configure the uplink positioning reference signal.

For example, it is determined that an LMF configures the uplink positioning reference signal for the terminal in the RRC inactive state and the terminal performs the cell handover, and the first information is transmitted to the network device. The first information is used to request the network device to configure the uplink positioning reference signal.

It should be noted that those skilled in the art may understand that the methods provided by the embodiments of the present disclosure may be executed alone or together with some methods in the embodiments of the present disclosure or some methods in the related art.

As shown in Fig. 8, an embodiment of the present disclosure provides an information reception method, the method is performed by the network device, and the method includes the following steps.

In step 81, first information transmitted from a terminal is received.

The first information is used to request the network device to configure an uplink positioning reference signal.

Here, the terminal involved in the present disclosure may be, but is not limited to, a mobile phone, a wearable device, a vehicle-mounted terminal, a roadside unit (RSU), a smart home terminal, an industrial sensing device and/or a medical device. In some embodiments, the terminal may be a Redcap terminal or a new radio (NR) terminal of a predetermined version (for example, a NR terminal of R17).

The network device involved in the present disclosure may also be an access network device or a core network device. The access network device may be a base station. The core network device may be a first network function, and the first network function may be a location management function network element. For example, the location management function network element includes a location server, and the location server may be implemented as any one of a location management function (LMF), an enhanced serving mobile location center (E-SMLC), a secure user plane location (SUPL) and a SUPL location platform (SUPLLP).

In an embodiment, the first information transmitted from the terminal is received. The first information is used for requesting the network device to configure the uplink positioning reference signal. The first information is transmitted from the terminal based on a configuration result. The configuration result is a result of configuring the uplink positioning reference signal for the terminal in a radio resource control (RRC) disconnected state. The RRC disconnected state is an RRC idle state or an RRC inactive state.

In an embodiment, the first information transmitted from the terminal is received through a predetermined message. The first information is used for requesting the network device to configure the uplink positioning reference signal. The predetermined message includes at least one of an RRC resume request message; an RRC uplink information transfer message; an RRC positioning assistance information; and an RRC setup complete message.

It should be noted that those skilled in the art may understand that the methods provided by the embodiments of the present disclosure may be executed alone or together with some methods in the embodiments of the present disclosure or some methods in the related art.

In order to better understand the embodiments of the present disclosure, the present disclosure is further explained by means of an illustrative embodiment.

An embodiment of the present disclosure provides an information transmission method as follows.

In an embodiment, a terminal transmits an uplink positioning reference signal request (corresponding to the first information in the present disclosure) to a network device, and the request is used to request a base station to configure an uplink positioning reference signal.

In an embodiment, when the network device configures the terminal with an uplink positioning reference signal in an RRC inactive state or an RRC idle state, the terminal receives a request from a lower layer for releasing the uplink positioning reference signal, and the terminal transmits an uplink positioning reference signal configuration request to the network device.

In an embodiment, when the network device configures the terminal with an uplink positioning reference signal in an RRC inactive state or an RRC idle state, the terminal receives an RRC resume message, and the terminal transmits an uplink positioning reference signal configuration request to the network device.

In an embodiment, when the network device configures the terminal with an uplink positioning reference signal in an RRC inactive state or an RRC idle state, the terminal receives an RRC setup message, and the terminal transmits an uplink positioning reference signal configuration request to the network device.

In an embodiment, when the network device configures the terminal with an uplink positioning reference signal in an RRC inactive state or an RRC idle state, in a case that the configured uplink positioning reference signal in the RRC inactive state is not associated with a valid area, the terminal transmits an uplink positioning reference signal configuration request to the network device after performing cell reselection.

In an embodiment, when the network device configures the terminal with an uplink positioning reference signal in an RRC inactive state or an RRC idle state, in a case that the configured uplink positioning reference signal in the RRC inactive state is associated with a valid area, the terminal transmits an uplink positioning reference signal configuration request to the network device after the terminal performs cell reselection and a cell reselected by the terminal is not in the valid area.

In an embodiment, when the network device configures the terminal with an uplink positioning reference signal in an RRC connected state, in a case that the terminal undergoes a cell handover, the terminal transmits an uplink positioning reference signal configuration request to the network device.

In an embodiment, the terminal transmits an uplink positioning reference signal configuration request through one of:
an RRC resume request message;
an RRC UL information transfer message;
an RRC UEPositioningAssistanceInfo message; and
an RRC setup complete message.

It should be noted that those skilled in the art may understand that the methods provided by the embodiments of the present disclosure may be executed alone or together with some methods in the embodiments of the present disclosure or some methods in the related art.

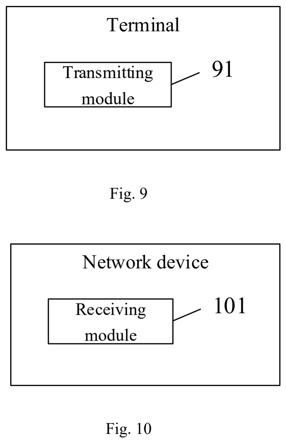

As shown in Fig. 9, an embodiment of the present disclosure provides a terminal, which includes a transmitting module 91 configured to transmit first information to a network device based on a configuration result.

The configuration result is a result of configuring an uplink positioning reference signal for the terminal in a radio resource control (RRC) disconnected state. The first information is used to request the network device to configure the uplink positioning reference signal. The RRC disconnected state is an RRC idle state or an RRC inactive state.

It should be noted that those skilled in the art may understand that the methods provided by the embodiments of the present disclosure may be executed alone or together with some methods in the embodiments of the present disclosure or some methods in the related art.

As shown in Fig. 10, an embodiment of the present disclosure provides a network device, which includes a receiving module 101 configured to receive first information transmitted from a terminal.

The first information is used to request the network device to configure an uplink positioning reference signal.

It should be noted that those skilled in the art may understand that the methods provided by the embodiments of the present disclosure may be executed alone or together with some methods in the embodiments of the present disclosure or some methods in the related art.

The embodiment of the present disclosure provides a communication system, which includes a terminal and a network device. The terminal is used to perform any method performed by the terminal in the present disclosure, and the network device is used to perform any method performed by the network device in the present disclosure.

An embodiment of the present disclosure provides a communication device, which includes: a processor; and a memory for storing instructions executable by the processor. The processor is configured to perform the method according to any embodiment of the present disclosure when executing the executable instructions.

The processor may include various types of storage media, which are non-transitory computer storage media, and may continue remembering the information stored thereon after power failure of the communication device.

The processor may be connected with the memory through a bus or the like, for reading the executable program stored on the memory.

An embodiment of the present disclosure also provides a computer storage medium, the computer storage medium is used to store a computer executable program, and when the executable program is executed by a processor, the method of any embodiment of the present disclosure is performed.

With regard to the devices in the above embodiments, the specific way in which each module performs operations has been described in detail in the embodiments of the methods, and is not described in detail here.

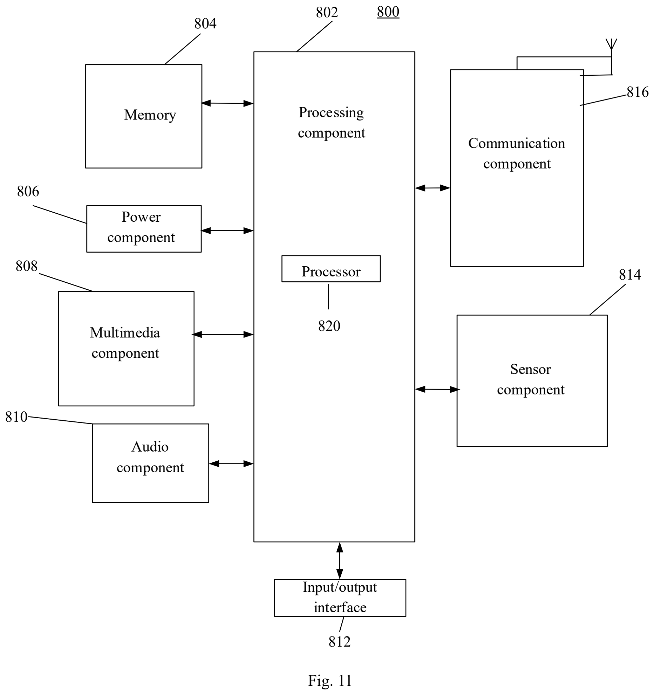

As shown in Fig. 11, an embodiment of the present disclosure provides a structure of a terminal.

Referring to Fig. 11, this embodiment provides a terminal 800, which may be a mobile phone, a computer, a digital broadcasting terminal, a messaging device, a game console, a tablet device, a medical device, a fitness device, a personal digital assistant and the like.

Referring to Fig. 11, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, telephone call, data communication, camera operation and recording operation. The processing component 802 may include one or more processors 820 to execute instructions to complete all or part of the steps of the method described above. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the terminal 800. Examples of these data include instructions for any application program or method operating on the terminal 800, contact data, phone book data, messages, pictures, videos, and the like. The memory 804 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the terminal 800. The power component 806 may include a power management system, one or more power supplies, and other components associated with generating, managing and distributing power for the terminal 800.

The multimedia component 808 includes a screen that provides an output interface between the terminal 800 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor may not only sense the boundary of the touch or sliding action, but also detect the duration and pressure related to the touch or sliding operation. In some embodiments, the multimedia component 808 includes a front camera and/or a rear camera. When the terminal 800 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 810 is configured to output and/or input audio signals. For example, the audio component 810 includes a microphone (MIC) configured to receive external audio signals when the terminal 800 is in an operation mode, such as a call mode, a recording mode and a voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, which may be keyboards, click wheels, buttons, etc. These buttons may include, but are not limited to, a home button, a volume button, a start button and a lock button.

The sensor component 814 includes one or more sensors for providing the terminal 800 with various aspects of state evaluation. For example, the sensor component 814 may detect the on/off state of the terminal 800, the relative positioning of components, such as the display and keypad of the terminal 800, the position change of the terminal 800 or a component of the terminal 800, the presence or absence of contact of the user with the terminal 800, the orientation or acceleration/deceleration of the terminal 800 and the temperature change of the terminal 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may further include an acceleration sensor, a gyro sensor, a magnetic sensor, a pressure sensor or a temperature sensor.

The communication component 816 is configured to facilitate wired or wireless communication between the terminal 800 and other devices. The terminal 800 may access a wireless network based on communication standards, such as Wi-Fi, 2G or 3G, or a combination thereof. In an illustrative embodiment, the communication component 816 receives a broadcast signal or broadcast related information from an external broadcast management system via a broadcast channel. In an illustrative embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic elements for performing the above methods.

In an illustrative embodiment, there is also provided a non-transitory computer-readable storage medium including instructions, such as the memory 804 including instructions, which may be executed by the processor 820 of the terminal 800 to complete the above method. For example, the non-transitory computer-readable storage medium may be a ROM, a random access memory (RAM), a CD-ROM, a magnetic tape, a floppy disk and an optical data storage device.

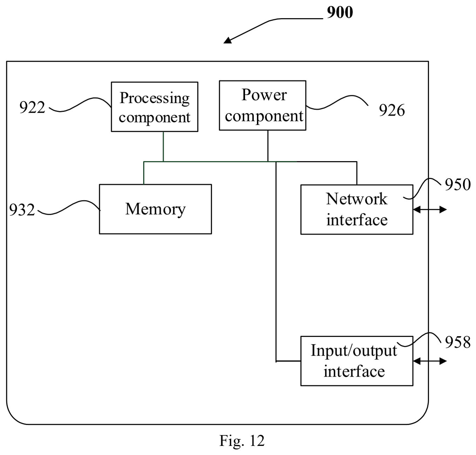

As shown in Fig. 12, an embodiment of the present disclosure shows a structure of a base station. For example, the base station 900 may be provided as a network-side device. Referring to Fig. 12, the base station 900 includes a processing component 922, which further includes one or more processors, and a memory resource represented by a memory 932 for storing instructions, such as application programs, executable by the processing component 922. The application program stored in the memory 932 may include one or more modules each corresponding to a set of instructions. In addition, the processing component 922 is configured to execute instructions to perform any of the aforementioned methods performed by the base station.

The base station 900 may further include a power component 926 configured to perform power management of the base station 900, a wired or wireless network interface 950 configured to connect the base station 900 to the network, and an input-output (I/O) interface 958. The base station 900 may operate based on an operating system stored in the memory 932, such as Windows Server ^{™}, Mac OS X^{™}, Unix^{™}, Linux^{™}, FreeBSD^{™} or the like.

Other embodiments of the present disclosure may easily occur to those skilled in the art after considering the specification and practicing the invention disclosed herein. The present disclosure is intended to cover any variation, use or adaptation of the present disclosure, which follows the general principles of the present disclosure and includes common sense or common technical means in the related art not disclosed in the present disclosure. The specification and examples are to be regarded as illustrative only, with the true scope and spirit of the present disclosure being indicated by the following claims.

It should be understood that the present disclosure is not limited to the precise structure described above and shown in the drawings, and various modifications and changes may be made without departing from the scope of the present disclosure. The scope of the present disclosure is limited only by the appended claims.

## Claims

1. An information transmission method, performed by a terminal, comprising:
transmitting first information to a network device based on a configuration result,
wherein the configuration result is a result of configuring an uplink positioning reference signal for the terminal in a radio resource control (RRC) disconnected state; the first information is used to request the network device to configure the uplink positioning reference signal; and the RRC disconnected state is an RRC idle state or an RRC inactive state.

2. The method according to claim 1, wherein transmitting the first information to the network device based on the configuration result comprises:
transmitting the first information to the network device based on the configuration result and received information.

3. The method according to claim 2, wherein transmitting the first information to the network device based on the configuration result and the received information comprises at least one of:
determining that request information from a lower layer for releasing the uplink positioning reference signal is received, and transmitting the first information to the network device; or
determining that the uplink positioning reference signal is configured and second information is received, and transmitting the first information to the network device, wherein the second information is configured to indicate the terminal to switch from the RRC disconnected state to a RRC connected state.

4. The method according to claim 3, wherein the second information is RRC resume information or RRC setup information.

5. The method according to claim 1, wherein transmitting the first information to the network device based on the configuration result comprises at least one of:
determining that the configured uplink positioning reference signal is not associated with a valid area, and transmitting the first information to the network device after the terminal performs cell reselection; or
determining that the configured uplink positioning reference signal is associated with a valid area and a reselected cell is not in the valid area, and transmitting the first information to the network device after the terminal performs cell reselection.

6. The method according to claim 1, wherein transmitting the first information to the network device based on the configuration result comprises:
determining that the uplink positioning reference signal is configured and the terminal performs cell handover, and transmitting the first information to the network device.

7. The method according to any one of claims 1-6, wherein transmitting the first information to the network device comprises:
transmitting the first information to the network device through a predetermined message;
wherein the predetermined message comprises at least one of:
an RRC resume request message;
an RRC uplink information transfer message;
an RRC positioning assistance information; or
an RRC setup complete message.

8. An information reception method, performed by a network device, comprising:
receiving first information transmitted from a terminal,
wherein the first information is configured to request the network device to configure an uplink positioning reference signal.

9. The method according to claim 8, wherein receiving the first information transmitted from the terminal comprises:
receiving the first information transmitted from the terminal through a predetermined message,
wherein the predetermined message comprises at least one of:
a radio resource control (RRC) resume request message;
an RRC uplink information transfer message;
an RRC positioning assistance information; or
an RRC setup complete message.

10. A terminal, comprising:
a transmitting module configured to transmit first information to a network device based on a configuration result,
wherein the configuration result is a result of configuring an uplink positioning reference signal for the terminal in a radio resource control (RRC) disconnected state; the first information is configured to request the network device to configure the uplink positioning reference signal; and the RRC disconnected state is an RRC idle state or an RRC inactive state.

11. A network device, comprising:
a receiving module configured to receive first information transmitted from a terminal,
wherein the first information is configured to request the network device to configure an uplink positioning reference signal.

12. A communication system, comprising a terminal and a network device, wherein
the terminal is configured to perform the information indicating method according to any one of claims 1-7; and
the network device is configured to perform the information indicating method according to any one of claims 8-9.

13. A communication device, comprising:
one or more processors configured to call an instruction to cause the communication device to perform the information indicating method according to any one of claims 1-7 and claims 8-9.

14. A storage medium, for storing instructions, which, when executed on a communication device, cause the communication device to perform the information indicating method according to any one of claims 1-7 and claims 8-9.
